Europäisches Patentamt

European Patent Office

Office européen des brevets

(11) Publication number: **0 344 248 B1**

# EUROPEAN PATENT SPECIFICATION

(45) Date of publication of patent specification: **08.03.95**  (51) Int. Cl.6: **A01N 25/26**

(21) Application number: **88909941.2**

(22) Date of filing: **19.10.88**

(86) International application number:
**PCT/US88/03742**

(87) International publication number:
**WO 89/03638 (05.05.89 89/10)**

(54) **COATING OF PESTICIDE WITH SULFONATED POLYMERS.**

(30) Priority: **20.10.87 US 110414**

(43) Date of publication of application:
**06.12.89 Bulletin 89/49**

(45) Publication of the grant of the patent:
**08.03.95 Bulletin 95/10**

(84) Designated Contracting States:
**BE DE FR GB IT NL SE**

(56) References cited:
**WO-A-87/06575**
**GB-A- 2 105 728**

(73) Proprietor: **EXXON CHEMICAL PATENTS INC.**
**1900 East Linden Avenue**
**Linden,**
**New Jersey 07036-0710 (US)**

(72) Inventor: **DUVDEVANI, Ilan**
**559 Nordhoff Drive**
**Leonia, NJ 07605 (US)**
Inventor: **DRAKE, Evelyn, Nobles**
**56 Pill Hill Road**

**Bernardsville, NJ 07924 (US)**
Inventor: **THALER, Warren, Alan**
**5 Pleasant View Way**
**Flemington, NJ 08822 (US)**
Inventor: **MANALASTAS, Pacifico, Viernes**
**316 McKinley Avenue**
**Edison, NJ 08820 (US)**
Inventor: **PASTERNAK, Israel, Szabsaj**
**1882 Clarence Street**
**Sarnia**
**Ontario N7T 7H6 (CA)**

(74) Representative: **Bawden, Peter Charles et al**
**EXXON CHEMICAL LIMITED**
**EXXON CHEMICAL TECHNOLOGY CENTRE**
**PO Box 1**
**Abingdon**
**Oxfordshire OX13 6BB (GB)**

**Description**

This application is a Continuation-in-part application of U.S.S.N. 808,034 filed December 12, 1985 and U.S.S.N. 855,349 filed April 24, 1986, the disclosures of which are hereby incorporated in their entirety by reference thereto.

This application also relates to U.S.S.N. 110,264 filed 10/20/87, filed concurrently herewith, commonly owned with the present application, the disclosure of which is hereby incorporated in its entirety by reference thereto.

BACKGROUND OF THE INVENTION

1. Field of the Invention

The present invention relates to pesticides, including herbicides, insecticides, bactericides, fungicides, nematicides, and sporicides to which thin or ultra-thin films or coatings of sulphonated polymers have been applied to produce an improved controlled release pesticide for delivery into agricultural ecosystems.

Sustainable, high productivity agriculture, requires that plant-required nutrients in the soil be supplemented or enriched with exogenously applied nutrients in the form of fertilizers. Similarly, the need to optimize plant growth by minimizing competition for valuable soil nutrients and moisture requires adequate control of plant pests, and in particular weeds, insects, and other plant pathogenic organisms.

The quality of the soil which has been used for agricultural purposes, however, is rapidly deteriorating. Excessive cultivation is destroying the soil structure and fabric thus making the soil more sensitive to erosion by wind and water, to dehydration due to increased aeration, and to increased compaction due to excessive use of heavy farm implements. In an attempt to minimize these undesireable effects, there has been a recent trend to minimize or substantially eliminate tillage. Thus, there is a major incentive to perform as many farm operations as possible simultaneously. Accordingly, farmers are attempting to enrich the soil with fertilizers and apply pest-control chemicals simultaneously.

The simultaneous fertilizer/pesticide application concept, however, is not without difficulties. The need for application of pesticide and fertilizer to the soil may not be contiguous, and both fertilizers and pesticides are subject to extensive losses, the extent of the losses increasing the longer these chemicals are in the soil.

Pesticides applied to soils also suffer losses. Water-soluble pesticides are readily leached into groundwaters. The magnitude of these losses and the inherent danger to humans and animals as a result of consumption of these contaminated waters has resulted in legislation in America and Europe to control the rate of application of many pesticides. Yet without prudent application of pesticides, crop pests will destroy crops and yields will be substantially reduced. Pesticides are also immobilized by chemical combination with clay minerals and soil organic matter thereby destroying their chemical reactivity and effectiveness against the target pest. In addition soil microorganisms attack these pesticides by processes such as decarboxylation, dechlorination, fission of heterocyclic rings, and the like. As a result of these reactions, the pesticide is often rendered ineffective or may be transformed into a more toxic chemical entity that is recalcitrant to further biodegradation and thus poses a magnified environmental hazard. For example, atrazine residues remain effective for an extended time period. The result is that continuous corn cultivation is not possible and plant breeders have been forced to develop atrazine-resistant corn cultivars. In addition, pesticides are often required to be effective over long time periods and yet the aforementioned processes act immediately upon introduction of the pesticide to the soil so that pesticidal efficacity diminishes substantially.

For these reasons, therefore, it is important that fertilizer use efficiency be dramatically increased and that pesticides remain effective as required. It is also essential that neither the fertilizers nor pesticides become hazards to human or animal health through movement into aquafer or chemical transformations in the soil that are magnified through the food chain.

Admixing of fertilizers and pesticides is becoming increasingly common for reasons of economy but more so to minimize the effects of excessive tillage on soil degradation. Recently it has become common practice to impregnate fertilizers such as urea with liquid solutions of herbicides such as triallate which are applied to the soil in the concept of "weed and feed." These mixtures of fertilizer and pesticide may be formed by a i) co-granulation process ii) the pesticide may be sorbed onto the fertilizer, or iii) the fertilizer may be immersed into the pesticide solution for coating and impregnation.

Although many attempts to control or slow the release of pesticides have been made with varying degrees of success, these efforts have focused primarily on encapsulation of the product with oils, waxes,

2

resins or polymers, or admixing with chemical agents which control enzymatic release of the pesticide. However, current encapsulation practices are both time-consuming and prohibitively expensive for wide-scale commercial agriculture.

The present invention, therefore, is based on the discovery that a solution of sulphonated polymer salt applied as a film or coating to a pesticide results in an agricultural product that effectively controls the target pests, and yet does not suffer from the disadvantages of conventional pesticides and particularly pesticides which are not coated with a sulfonated polymer film.

Although it is known to protect solid substrates, such as pipes, slabs, sheets and the like from the external environment with the use of barrier or protective coating materials, this technology has not been applied in accordance with the present invention, particularly with respect to agricultural products. In conventional applications, however, protection from water or moisture, polymer or organic materials are widely used. For cost effectiveness these materials are applied as thin films. The thickness of the film depends upon the desired degree of water protection. The thicker the film, the more likely that water penetration would be slowed down. In practice, applying an effective thin coating is difficult because of the various stresses tending to make the film discontinuous (e.g., film-rupture, pin holes). Films will rupture when a threshold stress is exceeded. The lateral stress tending to rupture a film is inversely proportional to an exponential power of the film thickness. The thinner the film, the more easily it will rupture. To provide film strength current practice requires the establishment of crosslinks in the coating by curing. Crosslinking (curing) can also improve the coating's resistance to water. Thin films which consist of molecules in relatively random configurations with a high degree of entanglements are superior to films containing molecules in relatively coiled states with few molecular entanglements. Accordingly, polymers containing associating ionic groups, i.e., ionomers, which have a high degree of molecular interactions make excellent protective films.

There are many applications for thickened or gelled solutions of polymers in inorganic liquids. There are also a number of physical and chemical techniques for preparing such systems. The present invention is concerned with a sulfonated polymer film or coatings having improved barrier properties which have been found to be particularly suitable for application to agricultural products, such as fertilizers and pesticides.

## SUMMARY OF THE INVENTION

The present invention relates to a pesticide provided with thin or ultra-thin films or coatings of sulfonated polymers to result in improved barrier properties and methods for producing such a coated pesticide. The pesticide coated with films of sulfonated polymers in accordance with the present invention are subject to decreased dissolution of soluble pesticide components resulting in increased pesticide use efficiency. The controlled release aspect of the pesticide coated with films in accordance with the present invention permits the pesticide to attack target pests without sacrificing any of the advantages discussed herein. In this regard, the coated pesticide has been found to exhibit increased resistance to biodegradation, and increased safety of handling of the pesticide.

## BRIEF DESCRIPTION OF THE DRAWING

Fig. 1 illustrates a plot of release of urea versus immersion time in water at 37°C for the skin, sulphonated coatings of the instant invention and control samples.

## DETAILED DESCRIPTION

The present invention relates to processes for forming films or coatings having improved barrier properties from an organic solution of a sulphonated polymer on pesticides, preferably in a solid form. The thin, substantially defect-free films or coatings of the present invention ensures increased pesticide use efficiency by the plant in diverse and sundry plant growth media including situations where the pesticide is applied in close or intimate proximity to the seed or plant.

The discovery of the film-forming properties of sulphonated ionomers has made possible the extension of their use to pesticides.

For purposes of the present invention, it is important that the film or coating be as thin as possible. In this regard, the coating concentration is dictated not only by economic considerations but also by the required performance. In most cases, the performance requirements include the control of release or dissolving property of the pesticide achievable with the application of at least one film or coating free of fine pinholes or any other defects. The present invention is a substantial improvement over conventional coated

EP 0 344 248 B1

pesticides, because current commercially-available controlled release agricultural products, e.g., fertilizers, must have relative thick coatings, i.e., 20-60% coating on a weight basis.

Although films or coatings of sulfonated polymers as thin as 200 $\mu$m, e.g., within the range of 50-200 $\mu$m, may be used in accordance with the present invention, the discovery of sulphonated ionomer coatings permits the application of thin, i.e., <50 $\mu$m, and preferably between about 0.5 to about 20 $\mu$m, defect-free films or coatings on pesticides can now be achieved. Thus their use presents a potential route for making affordable controlled release pesticides and extending applications of the same to a wide range of agricultural crops.

The present invention is based on the discovery that a solution of a sulphonated polymer salt can meet the requirements of an improved thin film or coating for vegetation enhancement agents, such as pesticides optionally in combination with fertilizers.

The process of the present invention can be more specifically described as a process for the stimulation of the germination and growth of vegetable matter, such as a seed or a plant, including seedlings, young plants or any organ from which a plant can be generated, while controlling or eliminating pests and undesired vegetation which involves the step of applying a pesticide and optionally a fertilizer having a thin layer of a sulphonated polymer coated thereon to the plant growth medium either before, simultaneously with or after the addition of the seed or plant to the said plant growth medium.

In addition, the process also relates to the intimate admixing of pesticides with a seed or plant, as defined herein, without damage to the same in a plant growth medium which involves the steps of:

1) admixing or otherwise contacting a pesticide optionally in combination with a fertilizer having a thin, sulphonated film or coating thereon with a seed or plant;
2) placing the coated agricultural product in close proximity to the seed or plant with or without a separation of time between the step of applying the coated agricultural product and seeding step.

The component materials of the controlled release coatings of the present invention generally include a water insoluble sulfonated polymer dissolved in an organic solvent system to form a solution with a concentration level within the range of about 0.1 to 20 weight percent and preferably about 0.5 to 6.0 weight percent.

The solvent system may include an organic solvent with or without a polar cosolvent, such as alcohol or amine. The solvent can be an organic liquid which is capable of dissolving the polymeric backbone of the sulfonated polymer. The water insoluble sulfonated polymers of the present invention comprise from about 4 to about 200 milliequivalents (meq.) of pendant sulfonate groups per 100 grams of polymer, and preferably from 10 to 100 meq. pendant sulfonate groups.

In most instances, the sulfonates utilized in the present invention are acids or are neutralized with transition elements selected from Groups IVA, VA, VIA, VIIA, VIIIA, IB, and IIB of the Periodic Table of Elements, and lead, tin, and antimony, as well as ammonium and amine counterions.

Sulfonated polymers which are suitable for purposes of the present invention include both plastic and elastic polymers. Specific polymers include sulfonated polystyrene, sulfonated methylstyrene, sulfonated copolymer of styrene-t-butyl styrene, styrene-methyl styrene, styrene-isobutylene, sulfonated ethylene copolymers, sulfonated atactic propylene polymers and propylene copolymers, sulfonated styrene/acrylonitrile copolymers, sulfonated styrene/methyl methacrylate copolymers, sulfonated block copolymers of styrene/ethylene oxide, acrylic acid copolymers with styrene, sulfonated isobutylene isoprene copolymers (Butyl rubber), sulfonated ethylene-propylene terpolymers, sulfonated isoprene styrene or butadiene styrene or butadiene styrene-block copolymers and the sulfonated hydrogenated block copolymers. Preferred sulfonated polymers of the present invention are ethylene-propylene terpolymers, Butyl rubber and poly-stryrene, with the ethylene-propylene terpolymers and polystyrene being more preferred. Most preferred sulfonated polymers are ethylene-propylene.

The sulfonated polymers of the present invention may vary in number average molecular weight within the range from about 1,000 to 10,000,000, preferably 5,000 to 1,000,000, more preferably from 10,000 to 600,000. These polymers may be prepared by methods known in the art, for example, see U.S. Patent No. 3,642,728, commonly owned with the present application, the disclosure of which is hereby incorporated by reference thereto. Preferred sulfonated polymers for use in the present invention, which are sulfonated ethylene propylene terpolymers, may be prepared by the procedures described in U.S. Patent No. 3,870,841, commonly owned with the present application, the disclosure of which is hereby incorporated by reference thereto.

Neutralization of the cited polymers with appropriate metal hydroxides, metal acetates, metal oxides, or ammonium hydroxide, and the like can be effected by means well known in the art. For example, the sulfonation process with Butyl rubber, containing 0.3 to 1.0 mole percent unsaturation, can be performed using a suitable solvent, such as toluene, with acetyl sulfate as the sulfonating agent, as described in U.S.

4

Patent No. 3,836,511, commonly owned with the present application, the disclosure of which is hereby incorporated by reference thereto. The resulting sulfonic acid derivative can then be neutralized with a number of different neutralization agents, such as sodium phenolate and similar metal salts. The amounts of such neutralization agents employed will normally be stoichiometrically related to the amount of free acid in the polymer, in addition to any unreacted reagent which is still present. It is preferred to use 10% more neutralizing agent than required to ensure full neutralization. The additional amount of such neutralization agent should be sufficient to effect at least 50 percent neutralization of the sulfonic acid groups present in the polymer, preferably at least 90 percent, and most preferably essentially complete neutralization of such acid groups should be effected. Thus, the degree of neutralization of said sulfonate groups may vary from essentially none, i.e., the free acid form, to greater than 90 mole percent or 100 mole percent, and preferably 50 to 100 mole percent. With the utilization of neutralized sulfonates in this present invention, it is most preferred that the degree of neutralization be substantially complete, i.e., with no substantial free acid present and without substantial excess of the base, other than that needed to ensure neutralization. It has been found that the neutralized sulfonates possess greater thermal stability compared to their acid form. Thus, it is preferred that the polymers which are normally utilized in the present invention comprise substantially neutralized pendant groups and, thus, an excess of the neutralizing material may be utilized without adversely affecting the results for purposes of the present invention.

The sulfonated polymers of the present invention may be neutralized prior to incorporation into the previously mentioned organic solvent or by neutralization of the acid form in situ. Preferably the acid derivative is neutralized immediately after preparation. For example, if the sulfonation of an EPDM terpolymer is conducted in solution, then the neutralization of the acid derivative can be conducted immediately following the sulfonation procedure. The neutralized polymer may then be isolated by means well known to those skilled in the art, i.e., coagulation, steam stripping or solvent evaporation, because the neutralized polymer has sufficient thermal stability to be dried for employment at a later time in the process of the present invention. It is well known that some unneutralized sulfonic acid derivatives do not possess good thermal stability and the above operations avoid that problem.

Specific examples of organic liquids to be employed as solvents with the various types of polymers are:

SOLUTIONS

| Polymer | Organic Liquid |
|---|---|
| sulfonated polystyrene | benzene, toluene, ethyl benzene, methylethyl ketone, xylene, styrene, ethylendichloride, methylene chloride. |
| sulfonated poly-t-butyl-styrene | benzene, toluene, xylene, ethyl benzene, styrene, t-butyl styrene, aliphatic oils, aromatic oils, hexane, heptane, decane, nonane. |
| sulfonated ethylene-propylene terpolymer | pentane, aliphatic and aromatic solvent oils, such as Solvent "100 Neutral", "150 Neutral", and similar oils, benzene, diesel oil, toluene, xylene, ethyl benzene, pentane, hexane, heptane, octane, isooctane, nonane decane aromatic solvents, ketone solvents. |
| sulfonated styrene-methyl methacrylate copolymer | dioxane, halogenated aliphatics, e.g., methylene chloride, tetrahydrofuran. |
| sulfonated polyisobutylene | saturated aliphatic hydrocarbons, dissobutylene, triisobutylene, aromatic and alkyl substituted aromatic hydrocarbons, chlorinated hydrocarbons, n-butyl ether, n-amyl ether, methyl oleate, aliphatic oils, oils predominantly paraffinic in |

| | |
|---|---|
| | nature and mixtures containing naphthenic hydrocarbons. "Solvent 100 Neutral," "Solvent 150 Neutral," and all related oils, low molecular weight polymeric oils such as squalene, while oils, and process oils having 60 percent or less aromatic content. |
| sulfonated polyvinyl toluene | toluene, benzene, xylene, cyclohexane, ethyl benzene, styrene, methylene chloride, ethylene dichloride. |

In order to reduce the viscosity of organic solutions of the sulfonated polymer so as to be able to employ the organic hydrocarbon solution in a coating process, a polar cosolvent may be added to the organic solution of the sulfonated polymer to solubilize the pendant ionomeric groups. In this regard, the cosolvent is useful in breaking up associated domains resulting from aggregation of ionic species. The cosolvent may be included in a concentration of from 0.01 to 15.0 weight percent and preferably 0.1 to 5.0 weight percent by total weight of polymer organic liquid and cosolvent. The polar cosolvents suitable for this purpose should have a solubility parameter of at least 10.0, preferably at least 11.0. Normally, the polar cosolvent will be a liquid at room temperature; however, this is not a requirement. It is also preferred, but not required, that the polar cosolvent be soluble or miscible with the organic liquid at the levels employed for purposes of this invention. The polar cosolvent may be selected from the group consisting essentially of alcohols, amines, di- or tri-functional alcohols, amides, acetamides, phosphates, or lactones and mixtures thereof. Preferred polar cosolvents are aliphatic alcohols, preferably selected from the group consisting of methanol, ethanol, n-propanol, isopropanol, 1,2-propane diol, monoethyl ether of ethylene glycol and n-ethylformamide. The most preferred polar solvents is toluene and the most preferred cosolvent is isopropanol.

The coatings of the present invention are formed by applying the organic solution of the sulfonated polymer over the substrate at any suitable temperature for the purpose, for example an ambient temperature or a temperature within the range of 50-80°C, by either dip-coating, spray-coating or other technique, such as brushing, for spreading a thin coating of the elastomer on the substrate. Preferred temperatures for purposes of this application are within the range of 30 to 60°C.

The organic solvent system is then permitted to evaporate with or without the aid of forced drying gas, such as air or nitrogen gas. This step is called the drying process. The drying gas temperature can be any temperature suitable for this purpose. For example, the drying gas temperature can be about ambient temperature or about the boiling point of the organic solvent system. After drying, the thickness of the applied coating should be 0.5 to 200 $\mu$m and preferably 100 to 200 $\mu$m. More preferred is a coating thickness of less than 50 $\mu$m, with a coating thickness of 0.5 to 20 $\mu$m being most preferred, for both performance and economic reasons. To control the thickness of the applied coating, the solution concentration of the sulfonated polymeric is applied at any concentration up to the solubility limit of the polymer in solution for the polymer solvent system selected which is within the skill of one in the art. For example, for sulfonated ethylene-propylene polymer in a toluene-isopropanol solvent system, the polymer concentration could be 0.1 to 20 weight percent and preferably at 0.5 to 6 weight percent. The coating solution of the sulfonated polymer can be applied in single or multiple layers, depending on the desired coating thickness. In any instance, the organic solvent system is evaporated after the application of each layer.

The sulfonated polymer coating can be applied over the substrate of interest or over a previous coating. In the latter case, such practice can modify or improve the performance of the coating system.

The sulfonated polymer coating can be used as a barrier to create desired slow release for many types of fertilizers suitable for purposes of the present invention including, by way of example, those disclosed in co-pending application U.S.S.N 110,264, filed 10/20/87, filed concurrently herewith, commonly owned with the present invention, the disclosure of which is hereby incorporated by reference thereto.

The plant growth media to which the present invention is applied includes liquid cultures i.e., hydroponics, soil-less cultures and any mixture of sand, vermiculite, peat, perlite, or any other inert or relatively inert support, and soils which can be either irrigated or rainfed soils.

Although the present invention can include combinations of fertilizers with any pesticide, the use of pesticides alone as well as pesticides not combined with fertilizers has been found to be particularly suitable for purposes of the present invention. Illustrative of pesticides suitable for purposes of the present invention include the herbicides and insecticides listed below:

**HERBICIDES** such as:

| Atrazine | Aatrex | Green Cross Products |
|---|---|---|
| Triallate | Avadex BW | Monsanto Chemical Co. |
| Trifluralin | Treflan | Eli Lilly Inc. (Elanco) |
| Glysophate | RoundUp | Monsanto Chemical Co. |
| Glysophote + 2,4-D | Rustler | Monsanto Chemical Co. |
| Sethoxydim | POAST | BASF |
| Metochlor | Dual | Green Cross Products |
| EPTC | Eptam | Chipman Inc. |
| EPTC + R25788 | Eradicane 8-E | Chipman Inc. |
| Metolachlor + arazine | Primextra | Green Cross Products |
| Metribuzin | Sencor | Chemagro Ltd. |

**INSECTICIDES** such as:

These are current granular insecticides:

| Terbufos | Counter 5-G | Cyanamid Ltd. |
|---|---|---|
| Fonofos | Dyfonate | Chipman Inc. |
| Carbofuran | Furadan | Chemagro Ltd. |
| Aldicarb | Temik | Union Carbide |

The vegetable matter, including seeds and plants, envisioned to be treated with pesticide in accordance with the present invention include the following:

**CEREALS,** such as:

| Common Name | Botanical Name |
| --- | --- |
| Barley | Hordeum vulgare |
| Buckwheat | Fagopyrun esculentum |
| Canarygrass | Phalaris canariensis |
| Maize | Zea mays |
| Millet | Pennisteum |
| Oats | Avena sativa |
| Rice | Oryza sativa |
| Rye | Secale cereale |
| Sundangrass | Sorghum sudanense |
| Sorghum | Sorghum vulgare |
| Sesame | Sesamum orientale |
| Triticale | Triticale Spp |
| Wheat | Triticum aestivum |

GRASSES (including turf), such as:

| Common Name | Botanical Name |
| --- | --- |
| Bahiagrass | Paspalum notatum |
| Beachgrass: American | Ammophilia breviligulata |
| European | Ammophilia arenaria |

| | | |
|---|---|---|
| Bentgrass: | Colonial | Agrostis tenuis |
| | Creeping | Agrostis palustris |
| | Velvet | Agrostis canina |
| Bermudagrass | | Cynodon dactylon |
| Bluegrass: | Annual | Poa annua |
| | Canada | Poa compressa |
| | Kentucky | Poa pratensis |
| Bluegrass: | Rough | Poa trivialis |
| | Upland | Poa glaucantha |
| Bromegrass-smooth | | Bromus inermis |
| Bromesedge | | Andropogon virginicus |
| Buffalograss | | Buchloe dactyloides |
| Canarygrass, reed | | Phalaris arundinacea |
| Carpetgrass | | Axonopus affinis |
| | | Axonopus Compressus |
| Centipedegrass | | Eremochloa ophiuroides |
| Crabgrass: | Large | Digitaria sanguinalis |
| | Smooth | Digitaria ischaemum |
| Dallisgrass | | Paspalum dilatum |
| Fescue: | Chewings | Festuca rubra |
| | Hard | Festuca duriuscula |
| | Meadow | Festuca elatior |
| | Red | Festuca rubrum |
| | Sheep | Festuca ovina |
| | Tall | Festuca arundinaceae |
| Goosegrass | | Polygonum aviculare |
| | | Argentina anserina |
| Grama: | Blue | Bouteloua gracilis |
| | Sideoats | Bouteloua curtipendula |
| Japanese lawngrass | | Zoysia japonica |
| Kikuyugrass | | Pennisetum clandestinum |
| Lovegrass, weeping | | Eragrostis curvula |
| Manilagrass | | Zoysia matrella |
| Orchardgrass | | Dactylis glomerata |
| Paspalum, field | | Paspalum laeve |
| Quickgrass/Couchgrass | | Agropyron repens |
| Redtop | | Agrostis alba / |
| | | agrostis stolonifera major |

```
Ryegrass:        Annual      Lolium multiflorum
                 Perennial   Lolium perenne
Ste. Augustinegrass          Stenotaphrum secundatum
Timothy                      Phleum pratense
Velvetgrass                  Holcus lanatus
Wheatgrass:  Crested         Agropyron desertorum
             Fairway         Agropyron cristatum
             Streambank      Agropyron riparium
Yardgrass                    Eleucine indica
Zoysiagrass                  Zoysia spp.
```

**LEGUMES, such as:**

| Common Name | Botanical Name |
|---|---|
| Alfalfa (lucerne) | Medicago sativa |
| Kidney Bean | Phaseolus vulgaris |
| Broad Bean (Fababean) | Vicia faba |
| Chickpea | Cicer arietinum |
| Clover | Trifolium spp. (T. pratense, T. repens, T. subterraneum) |
| Cowpea | Vigna sinensis |
| Groundnut | Arachis hypogaea |
| Lentil | Lens culinaris |
| Lupin | Lupinus |
| Mungbean | Phaseolus aureus |
| Pea | Pisum sativum |
| Soybean | Glycine max / Soja max |
| Winged bean | Psophocarpus tetragonolobus Vigna unguicultata |

**OILSEEDS, such as:**

| Common Name | Botancial Name |
|---|---|
| Canola | Brassica napus |
| Coconut | Cocos nucifera |
| Cotton | |
| Mustard | Brassica juncea, B. alba, B. niger |
| Flax/Linseed | Linum usitatissimum |
| Olive | Olea. spp. |
| Palm | Arecaceae spp. |
| Rapeseed | Brassica campestris |
| Safflower | Carthamus tinctorius |
| Seasame seed | Sesamum indicum |
| Sunflower | Helianthus annuus |

11

**ROOTS AND TUBERS, such as:**

| Common Name | Botanical Name |
|---|---|
| Cassava | Manihot esculenta |
| Potato | Solanum tuberosum |
| Sweet Potato | Ipomoea batatas |
| Taro | Colocasia esculenta |
| Yam | Dioscorea rotundata |

**SUGAR CROPS, such as:**

| Common Name | Botanical Name |
|---|---|
| Sugar beet | |
| Sugarcane | Saccharum spp. |
| Maple tree | Acer spp. |

VEGETABLES such as:

| Common Name | Botanical Name |
|---|---|
| Kidney bean | Phaseolus vulgaris |
| Beet | Beta vulgaris |
| Broccoli | Brassica oleracea var. italica |
| Brussel sprouts | Brassica oleracea var. gemmifera |
| Cabbage | Brassica oleracea var. capitata |
| Cantaloupe | Cucumis melo cantalupensis |
| Carrot | Daucus carota var. sativus |
| Cauliflower | Brassica oleracea var botrytis |
| Celery | Apium graveolens dulce |
| Chard | Beta vulgaris cicla |
| Chicory | Cichorium intybus |
| Chinese cabbage | Brassica pekinensis/B. chinensis |
| Collard | Brassica oleracea var. acephala |
| Cucumber | Cucumis sativus |
| Dill | Anethum graveolens |
| Egg Plant | Solanum melongena |

12

| | |
|---|---|
| Endive | Cichorium endivia |
| Fennel | Foeniculum vulgare |
| Kale | Brassica oleracea acephala |
| Kohl Rabi | Brassica oleracea caulorapa (B. oleracea gongylodes) |
| Leek | Allium ampeoloprasum/A. porrum |
| Lima Bean | Phaseolus limensis (P. lunatus) |
| Mustard | Brassica juncea |
| Okra | Abelmoschus esculentus (Hibiscus esculentus) |
| Onion | Allium cepa |
| Parsley | Petroselinum crispum (P. hortense) |
| Parsnip | Pastinaca sativa |
| Pea | Pisum sativum |
| Pepper | Capsicum annuum (C. frutescens) |
| Pumpkin | Cucurbita spp. |
| Radish | Raphanus sativus |
| Rutabaga | Brassica napobrassica |
| Salsify | Tragopogon porrifolius |
| Spinach | Spinacia oleracea |
| Squash | Cucurbita spp. |
| Sweet Corn | Zea mays var. rugos (var. saccharata) |
| Swiss Chard | Beta vulgaris cicla |
| Tomato | Lycopersicon (Lycopersicum) esculentum |
| Turnip | Brassica rapa |
| Watermelon | Citrullus lanatus (C. Vulgaris) |

**TREES such as:**

| Common Name | Botanical Name |
|---|---|
| Coniferous: | |
| White spruce | Picea glauca |
| Black spruce | Picea mariana |
| Red spruce | Picea rubra |
| Red pine | Pinus resinosa |
| Jack pine | Pinus banksiana |
| Lodgepole pine | Pinus contorta |
| Ponderosa pine | Pinus ponderosa |
| Eastern white pine | Pinus strobus |
| Western white pine | Pinus monticola |
| Balsam fir | Abies balsamea |
| Douglas fir | Pseudotsuga taxifolia |
| Rocky Mountain juniper | Juniperus scopulorum |
| Red juniper | Juniperus virginiana |
| Tamarack | Larix laricina |
| Hemlocks | Tsuga spp. |
| Deciduous: | |
| Maple | Acer spp. |
| Alder | Alnus spp. |
| Birch | Betula spp. |
| Hickory | Carya spp. |
| Chestnut | Castanea dentata |
| Dogwood | Cornus spp. |
| Ash | Fraxinus spp. |
| Crabapple | Malus spp. |
| Sycamore | Plantanus occidentalis |
| Cottonwood | Populus spp. |
| Cherry | Prunus spp. |
| Oak | Quercus spp. |
| Willow | Salix spp. |
| Elm | Ulmus spp. |

**ORNAMENTALS** such as:

| Common Name | Botanical Name |
|---|---|
| Carnation | Dianthus caryophyllus |
| Chyrsanthenum | Crysanthemum morifolium |
| Orchid | Cattleya spp., Cymbidiums spp. |
| Rose | Rosa manetti |
| Snapdragon | Antirrhinium majus |
| Bulbs: Begonias Crocus Snowdrop Hyacinth Lilly Daffodil Tulip Iris Gladiolus | |

**FRUITS,** such as:

| Common Name | Common Name | Common Name |
|---|---|---|
| Apple | Grape | Peach |
| Avocado | Grapefruit | Pineapple |
| Banana | Kiwi | Plantain |
| Blackberry | Lemon | Raspberry |
| Citrus | Lime Mango | Starfruit |
| Currant | Orange | Strawberry |
| Date | Papaya | Tangarine |

**NUTS** such as:

| Common Name | Common Name |
|---|---|
| Almonds | Hazelnuts (Filberts) |
| Cashew nuts | Pistachios |
| Chestnuts | Walnuts |
| Groundnuts | |

**INDUSTRIAL CROPS** such as:

| Common Name | Common Name | Common Name |
|---|---|---|
| Cocoa | Hops | Sesame |
| Coffee | Jute | Tea |
| Cotton | Oil palm | Tobacco |
| Hemp | Rubber | |

The rate of release of the active ingredient from the coated pesticide of the present invention can be controlled by the thickness of the sulfonated polymer coating, the degree of sulfonation of the polymer, the degree of neutralization of the sulfonate groups in the sulfonated polymers, the type of cation in the sulfonated polymers, the biodegradability of the sulfonated polymer, and the integrity and conformity of application of the polymer.

In accordance with the present invention, a substrate including a pesticide is subjected to one of the previously mentioned coating techniques so as to form a sulfonated polymer film on at least a portion of the surface of the substrate although it is preferred to form the sulfonated polymer film as a coating so as to completely encapsulate the substrate. The substrate including the pesticide preferably has a relatively small particle size on the order of about 1 to about 10 mm. Thus, in those instances where the substrate is a substantially solid form, such as granules, the substrate including the pesticide can be fluidized so as to expose the surfaces of the particles to a spray of the sulfonated polymer solution thereby enhancing the uniformity of the coating thickness. As used herein, the substrate including the pesticide is meant to include the pesticide itself, as well as other substances, such as inert carrier materials as well as fertilizers, with which the pesticide can be combined. In this regard, the pesticide may be physically combined with the substrate by adsorption or absorption, for example by mixing the pesticide with the substrate or impregnating the substrate with the pesticide. For example, 5.8 liters of triallate have been combined with 60 kg of urea by mixing prior to drying and subsequent coating with a sulphonate film. The coated composite of substrate including the triallate pesticide would be useful in treating one acre of hard spring red wheat. Thus, particularly suitable substrates for purposes of the present invention are solid materials which are impregnated with the pesticides prior to being coated with the sulfonated polymer films. In this regard, it should also be understood that the film of sulfonated polymer in accordance with the present invention may be applied to a pesticide which has previously been coated with a similar or dissimilar coating. Alternatively, a pesticide coated with a film of sulfonated polymer in accordance with the present invention could additionally be coated with a dissimilar material. Preferably, however, the process in accordance with the present invention is performed so that the sulfonated polymer film is in direct contact with or forms an exterior surface on the substrate including the pesticide.

In the following examples the sulfonated polymer used as a barrier coating was sulfonated EPDM terpolymer (TP-320) and was prepared by sulfonating a 40 Mooney viscosity at 100°C EPDM terpolymer (Royalene 521-Uniroyal) which has about 50 weight percent ethylene, about 5 weight percent ENB, with acetyl sulfate and neutralizing with $Zn (Ac)_2$ according to the procedure of U.S. Patent No. 3,836,511, thereby producing 10 meq. of zinc sulfonate groups per 100 g of the EPDM terpolymer and 25 meq. of zinc sulfonated groups per 100 g of the EPDM terpolymer.

**Claims**

1. A pesticide composite comprising:
    (a) a substrate which comprises a pesticide; and
    (b) the surface of the substrate being coated with at least one film of sulfonated polymer having a sulfonate content of 4 to 200 meq. per 100 g of said sulfonated polymer.

2. The pesticide composite according to claim 1, wherein said sulfonate polymers are neutralized sulfonated polymers and said sulfonate groups are neutralized with a member selected from the group consisting of an ammonium counterion and a metal counterion.

3. The pesticide composite according to claim 2, wherein said sulfonate groups are 50 to 100 mole percent neutralized.

4. The pesticide composite according to claims 1 to 3, wherein said neutralized sulfonate polymer is formed from an elastomeric polymer.

5. A method of producing a coated pesticide as in claim 1 composite comprising:
   (a) providing a substrate including a pesticide; and
   (b) coating at least one surface of said substrate with a film of sulfonate polymer dissolved in a solvent system including an organic liquid.

6. The method according to claim 5, wherein said solvent system comprises a cosolvent.

7. The method according to claim 6, wherein said cosolvent is a polar cosolvent.

**Patentansprüche**

1. Pestizidverbundmaterial, das
   (a) ein Pestizid umfassendes Substrat umfaßt, dessen
   (b) Oberfläche mit mindestens einer Folie aus sulfoniertem Polymer mit einem Sulfonatgehalt von 4 bis 200 mÄq je 100 g des sulfonierten Polymers beschichtet ist.

2. Pestizidverbundmaterial nach Anspruch 1, bei dem die Sulfonatpolymere neutralisierte sulfonierte Polymere sind und die Sulfonatgruppen mit einem Mitglied ausgewählt aus der Gruppe bestehend aus einem Ammoniumgegenion und einem Metallgegenion neutralisiert sind.

3. Pestizidverbundmaterial nach Anspruch 2, bei dem die Sulfonatgruppen zu 50 bis 100 Mol.% neutralisiert sind.

4. Pestizidverbundmaterial nach einem der Ansprüche 1 bis 3, bei dem das neutralisierte Sulfonatpolymer aus einem elastomeren Polymer gebildet ist.

5. Verfahren zur Herstellung eines beschichteten Pestizidverbundmaterials gemäß Anspruch 1, bei dem
   (a) ein Pestizid einschließendes Substrat vorgelegt und
   (b) mindestens eine Oberfläche des Substrats mit einer Folie aus in einem Lösungsmittelsystem gelösten Sulfonatpolymer beschichtet wird, wobei das Lösungsmittelsystem eine organische Flüssigkeit einschließt.

6. Verfahren nach Anspruch 5, bei dem das Lösungsmittelsystem ein Colösungsmittel umfaßt.

7. Verfahren nach Anspruch 6, bei dem das Colösungsmittel ein polares Colösungsmittel ist.

**Revendications**

1. Composite pesticide comprenant :
   (a) un substrat qui comprend un pesticide ; et
   (b) un revêtement sur la surface du substrat, revêtement consistant en au moins un film d'un polymère sulfoné ayant une teneur en groupes sulfonate de 4 à 200 meq pour 100 g dudit polymère sulfoné.

2. Composite pesticide suivant la revendication 1, dans lequel les polymères sulfonés sont des polymères sulfonés neutralisés et les groupes sulfonate sont neutralisés avec un membre du groupe consistant en un ion complémentaire ammonium et un ion complémentaire métallique.

3. Composite pesticide suivant la revendication 2, dans lequel les groupes sulfonate sont neutralisés à un taux de 50 à 100 moles %.

4. Composition pesticide suivant les revendications 1 à 3, dans lequel le polymère sulfoné neutralisé est formé à partir d'un polymère élastomère.

5. Procédé de production d'un composite pesticide enrobé suivant la revendication 1, comprenant :

(a) la préparation d'un substrat comprenant un pesticide ; et
(b) le revêtement d'au moins une surface dudit substrat avec un film d'un polymère sulfoné dissous dans une formulation de solvant comprenant un liquide organique.

6. Procédé suivant la revendication 5, dans lequel la formulation de solvant comprend un cosolvant.

7. Procédé suivant la revendication 6, dans lequel le cosolvant est un cosolvant polaire.